# EUROPEAN PATENT APPLICATION

(11) **EP 3 936 729 A1**
(43) Date of publication of application: **12.01.2022**
(21) Application number: 21176029.3
(22) Date of filing: 26.05.2021
(51) Int. Cl.: F16B 2/24, A45B 9/00, A61H 3/02, F16B 7/04, F16B 7/10

(54) **ELEMENT FOR FIXING THE ADJUSTMENT OF THE LENGTH OF TELESCOPIC ELEMENTS SUCH AS CRUTCHES AND/OR TREKKING POLES AND/OR THE LIKE, AND METHOD FOR THE PROVISION THEREOF**

(30) Priority: 09.07.2020 IT 202000016615
(71) Applicant: Ursus S.P.A., 36027 Rosa' VI (IT)
(72) Inventor: FERRONATO, Sergio, 36027 ROSA' VI (IT)
(74) Representative: Modiano, Micaela Nadia

(57) **Abstract**

An element (10) for fixing the adjustment of the length of telescopic elements (11), which comprises a laminar spring (17) and a pin (16) that extends from one end (18) of the laminar spring (17) and is obtained from the spring by drawing. The pin (16) has a continuous perimetric profile.

## Description

The present invention relates to an element for fixing the adjustment of the length of telescopic elements such as crutches and/or trekking poles and/or the like.

The invention also relates to a method for the provision thereof.

Currently, walking aids such as trekking poles or crutches, which have an adjustable length in order to adapt to the height of the user, are widespread.

Usually, such aids can be lengthened/shortened telescopically and have a first tube and a second tube which can slide inside the first one.

In order to fix the adjustment of the length of the pole, the first tube has a row of through holes, arranged in parallel to its longitudinal extension axis, and the second tube has a through hole.

The holes of the row of the first tube and the hole of the second tube are arranged so that, depending on the necessary length, one hole of the row of the first tube corresponds to the hole of the second tube.

A length adjustment fixing element is inserted through these two corresponding holes.

Such length adjustment fixing element is generally a snap-acting elastic element, contained inside the second tube, which has a pin that protrudes from the hole of the latter.

Normally, the length adjustment fixing element, known also as "push-pin", is constituted by a laminar spring with a pin.

Substantially, at one end of said laminar spring the element has a pin, adapted to be inserted in a pair of corresponding holes constituted by the hole of the second tube and a hole of the first tube.

This background art has some drawbacks.

In fact, some length adjustment fixing elements of the known type are provided by welding together a laminar spring and a pin, which are provided separately.

This leads to a long and energy-consuming process.

As an alternative, the fixing element is provided starting from a single piece of metal plate, which is cut, bent and drawn at one end to form the pin.

This background art, too, has some drawbacks.

The end drawn to form the pin has no continuity on the perimetric profile.

The expression "perimetric profile", in the present description, is understood to reference the profile of the pin that lies substantially on the same plane as the portion of laminar spring from which it extends and/or on a plane that is substantially parallel thereto.

Consequently, the pin is substantially constituted by two portions of bent and drawn metal plate, joined at the tip.

This causes a reduced stiffness of the pin, which can be deformed easily under the action of the weight of the first tube and of the user.

In order to overcome this drawback, some manufacturers of fixing elements stiffen the pin by inserting inside it, therefore between the two portions of bent and drawn metal plate, an insert, in order to ensure a stiffness of the pin that is sufficient to bear the load of the first tube of the pole and of the user without being deformed.

This causes a significant consumption of material arising from the need to also provide the insert, and a long and awkward assembly, also due to the millimeter-range dimensions of the various components to be assembled.

Furthermore, the insert, with use and over time, often slides out, reducing in practice the stiffness of the pin.

The aim of the present invention is to provide an element for fixing the adjustment of the length of telescopic elements such as crutches and/or trekking poles and/or the like that is capable of improving the background art in one or more of the aspects mentioned above.

Within this aim, an object of the invention is to provide an element for fixing the adjustment of the length of telescopic elements such as crutches and/or trekking poles and/or the like that allows easier and quicker provision than elements of the known type and with a lower energy expenditure.

Another object of the invention is to devise an element for fixing the adjustment of the length of telescopic elements such as crutches and/or trekking poles and/or the like that has a suitable stiffness without the need for an insert in the pin.

A further object of the present invention is to overcome the drawbacks of the background art in a manner that is alternative to any existing solutions.

Not the least object of the invention is to provide an element for fixing the adjustment of the length of telescopic elements such as crutches and/or trekking poles and/or the like that is highly reliable, relatively easy to provide and has competitive costs.

This aim and these and other objects that will become more apparent hereinafter are achieved by an element for fixing the adjustment of the length of telescopic elements, which comprises a laminar spring and a pin that extends from one end of said laminar spring and is obtained from said spring by drawing, characterized in that said pin has a continuous perimetric profile.

Further characteristics and advantages of the invention will become more apparent from the description of a preferred but not exclusive embodiment of the element for fixing the adjustment of the length of telescopic elements such as crutches and/or trekking poles and/or the like, according to the invention, illustrated by way of non-limiting example in the accompanying drawings, wherein:
Figure 1 is a partially sectional view of a portion of a telescopic element with a length adjustment fixing element, according to the invention;
Figure 2 is a first perspective view of an element for fixing the adjustment of the length of telescopic elements such as crutches and/or trekking poles and/or the like, according to the invention;

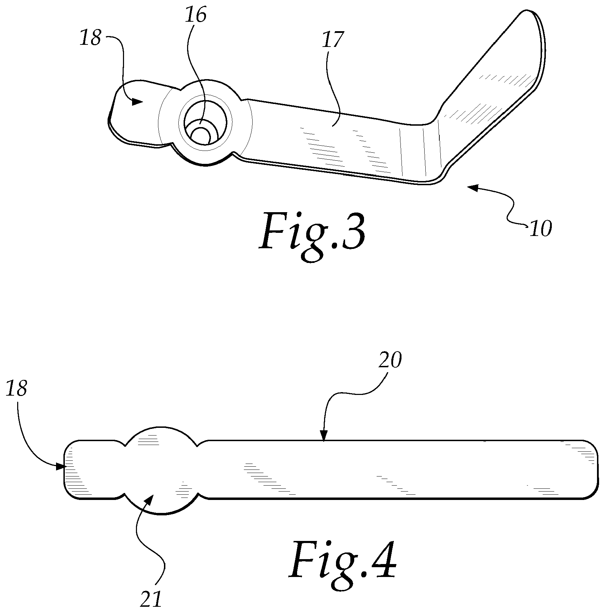

Figure 3 is a different perspective view of the element of Figure 2;
Figure 4 is a view of a semi-finished product in an operating step of the method for providing the fixing element of Figures 2 and 3.

With reference to the figures, an element for fixing the adjustment of the length of telescopic elements such as crutches and/or trekking poles and/or the like, according to the invention, is generally designated by the reference numeral 10.

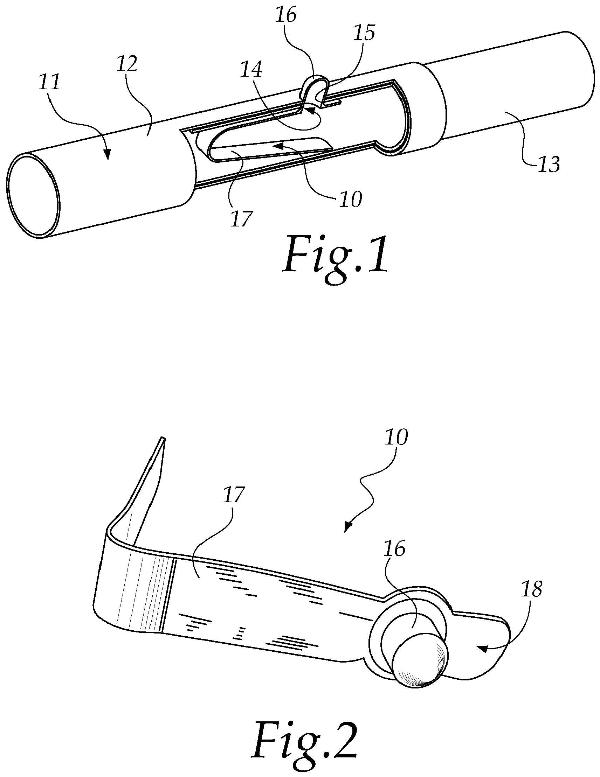

Figure 1 shows an operational application of the element 10.

In such figure, the element 10 is inserted in a telescopic element 11, a pole in the case provided as an example.

The pole 11 comprises a first tube 12 and a second tube 13 which can slide inside the first tube 12.

The first tube 12 has a row of first through holes, of which only the one designated by the reference numeral 14 is evident in Figure 1, said row being arranged in parallel to the axis of extension of said tube.

The second tube 13 has a second through hole 15.

The first holes of the row of the first tube 12 and the second hole 15 of the second tube 13 are arranged so that depending on the necessary length, a first hole of the row of the first tube 12, the hole 14 in Figure 1, corresponds to the second hole 15 of the second tube 13.

A pin 16 of the element 10 accommodated inside the second tube 13 is inserted through these two corresponding holes.

The element 10 for fixing the adjustment of the length of telescopic elements such as crutches and/or trekking poles and/or the like is made of metallic material and comprises a laminar spring 17 and the pin 16.

The element 10 is, for example, made of spring steel.

The pin 16 extends from a first end 18 of the spring 17 and is obtained from the spring 17 by drawing.

The pin 16 is monolithic with the spring 17 and is provided by drawing, starting from the same strip of metal plate of the spring 17.

One of the particularities of the invention resides in the fact that the pin 16 has a continuous perimetric profile.

The method for providing the element 10 consists in:
- cutting a strip 20 of metal plate, having a substantially rectangular shape, with a larger surface portion 21 proximate to a first end 18,
- drawing said larger surface portion 21 so as to form the pin 16,
- bending the strip 20 so as to form the laminar spring 17.

Optionally, it is possible to finish the edge of the spring 17 both at the base of the pin 16 and elsewhere in order to eliminate machining waste.

This operation can be performed both after drawing and after bending.

The strip of metal plate has, for example, a thickness on the order of 0.8 mm, a length on the order of 35 mm, and a width on the order of 10 mm.

In the present description, the term "thickness" indicates the dimension in the direction at right angles to the plane of arrangement of the metal plate, the term "length" indicates the dimension along the direction of extension of the strip, and the term "width" indicates the dimension at right angles to the thickness and the length.

The larger surface portion has a width on the order of 12 mm.

In case of finishing, at the end of the production, the larger surface portion can have the same width as the strip.

The pin 16 has, for example, a height on the order of 8.6 mm.

In the present description, the term "height" is understood to mean the dimension of the pin 16 along the direction at right angles to the plane of arrangement of the first end 18 from which it extends.

In practice it has been found that the invention has achieved the intended aim and objects, providing an element for fixing the adjustment of the length of telescopic elements such as crutches and/or trekking poles and/or the like that allows easier and quicker provision than elements of the known type and with a lower energy expenditure.

Furthermore, the invention provides an element for fixing the adjustment of the length of telescopic elements such as crutches and/or trekking poles and/or the like that has a suitable stiffness without the need for an insert in the pin.

The invention thus conceived is susceptible of numerous modifications and variations, all of which are within the scope of the appended claims; all the details may furthermore be replaced with other technically equivalent elements.

In practice, the materials used, as long as they are compatible with the specific use, as well as the contingent shapes and dimensions, may be any according to the requirements and the state of the art.

The disclosures in Italian Patent Application No. 102020000016615 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An element (10) for fixing the adjustment of the length of telescopic elements (11), which comprises a laminar spring (17) and a pin (16) that extends from one end (18) of said laminar spring (17) and is obtained from said spring by drawing, **characterized in that** said pin (16) has a continuous perimetric profile.

2. The element (10), according to claim 1, **characterized in that** said pin (16) is monolithic with said spring (17).

3. The element (10) according to one or more of the preceding claims, **characterized in that** said pin (16) and said spring (17) are provided starting from the same strip of metal plate.

4. The element (10) according to one or more of the preceding claims, **characterized in that** it is made of spring steel.

5. A method for providing an element (10) according to one or more of the preceding claims, which consists in:
- cutting a strip (20) of metal plate with a larger surface portion (21) proximate to a first end (18),
- drawing said larger surface portion (21) so as to form said pin (16),
- bending said strip (20) so as to form said laminar spring (17).

6. The method according to the preceding claim, **characterized in that** it comprises an edge finishing step.

7. The method according to claim 5 or 6, **characterized in that** a strip of metal plate is cut which has a thickness on the order of 0.8 mm, a length on the order of 35 mm, and a width on the order of 10 mm.

8. The method according to one or more of claims 5 to 7, **characterized in that** said larger surface portion has a width on the order of 12 mm.

9. The method according to one or more of claims 5 to 8, **characterized in that** said pin (16) has a height on the order of 8.6 mm.
